(19) Europäisches Patentamt
European Patent Office
Office européen des brevets

(11) **EP 3 893 146 A1**

(12) **EUROPEAN PATENT APPLICATION**

(43) Date of publication:
**13.10.2021 Bulletin 2021/41**

(21) Application number: **20168790.2**

(22) Date of filing: **08.04.2020**

(51) Int Cl.:
*G06K 9/00* (2006.01)     *G06K 9/34* (2006.01)
*G06K 9/62* (2006.01)     *G06T 7/00* (2017.01)
*G06T 7/136* (2017.01)    *G06T 7/194* (2017.01)
*G06K 9/46* (2006.01)     *G01N 21/64* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Leica Microsystems CMS GmbH 35578 Wetzlar (DE)**

(72) Inventor: **GALDA, Harald 44894 Bochum (DE)**

(74) Representative: **2SPL Patentanwälte PartG mbB Postfach 15 17 23 80050 München (DE)**

Remarks:
Amended claims in accordance with Rule 137(2) EPC.

(54) **AN APPARATUS FOR DETERMINING A CLASSIFIER FOR IDENTIFYING OBJECTS IN AN IMAGE, AN APPARATUS FOR IDENTIFYING OBJECTS IN AN IMAGE AND CORRESPONDING METHODS**

(57)     An apparatus (100) for determining a classifier for identifying objects in an image is configured to receive a preliminary annotation (110) for pixels of the image, the preliminary annotation (110) comprising annotations for pixels to belong to an object or to background. The apparatus is further configured to transform the preliminary annotation (110) to an enhanced annotation (120), the enhanced annotation (120) further comprising at least one of annotations for pixels to belong to a transition between the background and an object, and annotations for pixel to belong to a transition between object. The classifier (130) is determined based on the enhanced annotation and a representation of the pixels of the image.

Fig. 1

**Description**

**Technical field**

Examples relate to apparatuses for identifying objects in an image and for determining classifiers used for identifying objects in an image.

**Background**

There are multiple tasks where it is required to identify objects in an image. For example, in microscopy or medical diagnosis applications it may be required to identify microorganisms or organelles within an image. This may, amongst others, be of interest for counting the numbers of multiple different microorganisms within a probe. In such an application, a first task may be to identify the microorganisms within the image and a second task may be to determine the particular type of microorganism identified, e.g. to classify the identified objects.

Identifying the microorganisms within an image may require to distinguish the microorganisms from the background of the image and to identify microorganisms that overlap from the perspective of the microscope, resulting in them directly touching within the two dimensional image. Identifying objects in an image may be performed using filters such as edge filters or using thresholds for the intensities of the pixels within the image. Such conventional methods may, however, achieve only unsatisfactory results, for example in the event of images with unpredictable or strongly varying characteristics. One particular example for an image where it is difficult to identify an object with conventional approaches is an image having a low contrast. Unpredictable or varying characteristics may, for example, be an inherent property of the image taking technology used or caused by different environments in which the images are taken.

Therefore, there is a demand to improve the identification of objects within images

**Summary**

Such demand may be satisfied by the subject matter of one of the independent claims.

An embodiment relates to an apparatus for determining a classifier for identifying objects in an image, configured to receive a preliminary annotation for pixels of the image, the preliminary annotation comprising annotations for pixels to belong to an object or to background and to transform the preliminary annotation to an enhanced annotation. The enhanced annotation further comprises at least one of annotations for pixels to belong to a transition between the background and an object, and annotations for pixels to belong to a transition between objects. Further, the apparatus is configured to determine a classifier based on the enhanced annotation and a representation of the pixels of the image. Using the enhanced annotation that can additionally characterize a pixel within an image as not only belonging to an object or to background but also as belonging to a transition between the background and an object and/or to a transition between different objects has proven to enable the determination of highly reliable classifiers. The so determined classifiers achieve a better classification result as compared to classifiers who are determined using the preliminary annotation only. Classifiers having a better classification result determine whether a pixel within a two-dimensional image belongs to an object or to background with a lower failure rate as compared to conventionally determined classifiers.

According to an embodiment, the classifier is a random forest. A random forest is a statistical classifier that may determine, whether a pixel belongs to an object or to background. Eventually, the random forest may also determine, whether a pixel belongs to a transition between the background and an object, and whether a pixel belongs to a transition between objects. A random forest can be trained or determined using a smaller set of training data as compared to other classification techniques. Using a random forest, therefore, may allow to train the classifier for classification of pixels within an image even though only limited amount of data can be generated for training purposes.

In a further embodiment, the apparatus is configured to train the classifier using the representation and the enhanced annotation of a subset of the pixels of the image. Training the classifier using only a subset of the pixels within an image may, for example, allow to use the remaining pixels within the image as a reference group for checking the performance of the classifier. The pixels within a single image may, therefore, serve as both training and verification data, which may result in a reduction of the number of images required to train the classifier.

In a further embodiment, the apparatus is configured to determine a probability map indicating a probability for pixels within an image to belong to an object using the classifier and the representation of the pixels of the image. Determining a probability map may allow for further processing steps that evaluate the probability of each pixel to belong to an object before finally concluding, whether a pixel belongs to an object or not. This may be result in a better detection accuracy as compared to implementations where the classifier directly generates the binary information whether a pixel belongs to an object or to background.

A further embodiment relates to an apparatus for identifying objects in an image, configured to determine a probability map indicating a probability for pixels within an image to belong to an object based on a classifier and on a representation of the pixels of the image. The apparatus is further configured to derive pixels belonging to an object using the probability map and a preliminary annotation, the preliminary annotation comprising annotations for pixels to belong to an object or to background. By not only evaluating the probability map alone but by additionally considering the preliminary annotation, the accuracy of the final determination, as to whether a pixel belongs to an object or not, can be increased.

In a further embodiment, the apparatus is configured to vary a threshold indicating that a pixel having a probability above the threshold belongs to an object until a metric fulfills a predetermined criterion. The metric is based on a relation of the pixels having a probability above the threshold and the pixels having a preliminary annotation to belong to an object. Using a metric being based on both, the pixels that would be classified to belong to an object using the threshold and pixels that are assumed to belong to an object according to the preliminary annotation may serve to determine the threshold such that the determination accuracy is increased as compared to approaches not considering the preliminary annotation for determining the threshold.

In a further embodiment, the apparatus is configured to compute an average Dice coefficient of all objects in the image as the metric. A Dice coefficient is a measure for the similarity of the classification according to the preliminary annotation and the classification resulting from applying the threshold. Using the dice coefficient to judge the appropriateness of a chosen threshold, therefore, may result with a properly chosen threshold for a particular image or for a particular series of images.

According to a further embodiment, the apparatus is configured to vary the threshold until the metric is maximized. Finding the threshold maximizing the metric may result with the best possible threshold for a particular image or for a particular series of images.

A further embodiment relates to an apparatus for identifying objects in an image based on a probability map and on a preliminary annotation for pixels of the image, the probability map indicating a probability for pixels within the image to belong to an object, and the preliminary annotation comprising annotations for pixels to belong to an object or to background. The apparatus is configured to vary a threshold indicating that a pixel having a probability above the threshold belongs to an object until a metric fulfills a predetermined criterion, the metric being based on a relation of the pixels having a probability above the threshold and the pixels having a preliminary annotation to belong to an object. Using a metric being based on both, the pixels that would be classified to belong to an object using the threshold and pixels that are assumed to belong to an object according to the preliminary annotation may result with the threshold to be determined such that the determination accuracy is high.

According to an embodiment, the apparatus is configured to compute an average dice coefficient of all objects in the image as the metric. Using the dice coefficient to judge the appropriateness of a chosen threshold may result with a reliable threshold for a particular image or for a particular series of images.

An embodiment of a method for determining a classifier for identifying objects in an image comprises receiving a preliminary annotation for pixels of the image, the preliminary annotation comprising annotations for pixels to belong to an object or to background. The method further comprises transforming the preliminary annotation to an enhanced annotation, the enhanced annotation further comprising at least one of annotations for pixels to belong to a transition between the background and an object, and annotations for pixel to belong a transition between objects. Further, the method comprises determining the classifier using the enhanced annotation and a representation of the pixels of the image. Using the enhanced annotation that can additionally characterize a pixel within an image as not only belonging to an object or to background but also as belonging to a transition between the background and an object and/or to a transition between objects has proven to enable the determination of reliable classifiers. The so determined classifiers may achieve a better classification result as compared to classifiers who are determined using the preliminary annotation only.

According to an embodiment, the method further comprises training the classifier using the representation and the enhanced annotation of a subset of the pixels of the image. Training the classifier using only a subset of the pixels within an image may allow to use the remaining pixels within the image as a reference group for checking the performance of the classifier. The pixels within a single image may, therefore, serve as training and as verification data, which may result in a reduction of the number of images required to train the classifier.

Another embodiment relates to a method for identifying objects in an image based on a probability map and on a preliminary annotation for pixels of the image, the probability map indicating a probability for pixels within the image to belong to an object, and the preliminary annotation comprising annotations for pixels to belong to an object or to background. The method comprises varying a threshold indicating that a pixel having a probability above the threshold belongs to an object until a metric fulfills a predetermined criterion, the metric being based on a relation of the pixels having a probability above the threshold and the pixels having a preliminary annotation to belong to an object. Using a metric being based on both, the pixels that would be classified to belong to an object using the threshold and pixels that are assumed to belong to an object according to the preliminary annotation may result with the threshold to be determined such that the determination accuracy is high.

According to a further embodiment of the method, the method further comprises computing an average Dice coefficient of all objects in the image as the metric. Using the dice coefficient to judge the appropriateness of a chosen threshold may result with a reliable threshold for a particular image or for a particular series of images.

## Short description of the Figures

Some examples of apparatuses and/or methods will be described in the following by way of example only, and with reference to the accompanying figures, in which

Fig. 1 schematically illustrates an embodiment of an apparatus for determining a classifier for identifying objects in an image;

Fig. 2 schematically illustrates an embodiment of an apparatus for identifying objects in an image;

Fig. 3 schematically illustrates a further embodiment of an apparatus for identifying objects in an image;

Fig. 4 illustrates a flowchart of an embodiment of a method for determining a classifier for identifying objects in an image; and

Fig. 5 illustrates a flowchart of an embodiment of a method for identifying objects in an image;

Fig. 6 illustrates a further flowchart of an embodiment of a method for identifying objects in an image having additional processing steps; and

Fig. 7 illustrates an embodiment of a microscope system.

## Detailed Description

Various examples will now be described more fully with reference to the accompanying drawings in which some examples are illustrated. In the figures, the thicknesses of lines, layers and/or regions may be exaggerated for clarity.

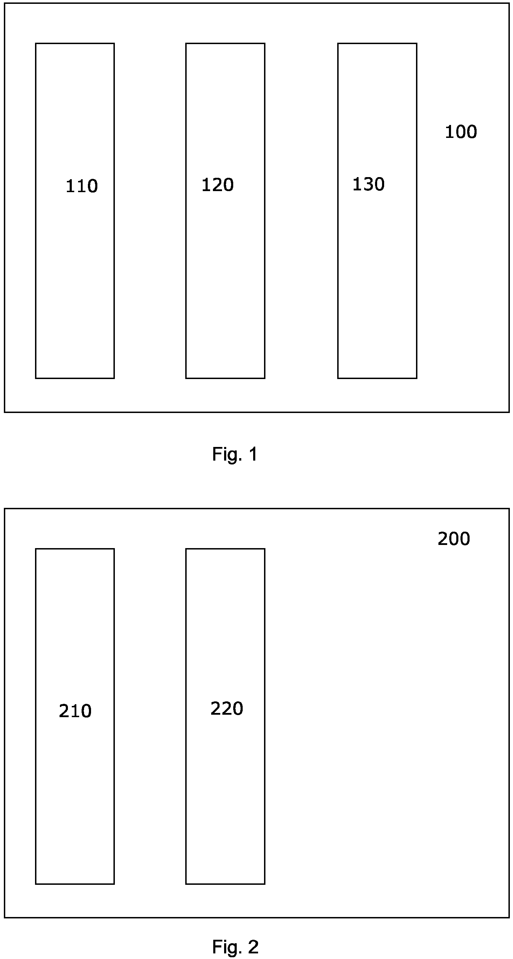

Fig. 1 schematically illustrates an embodiment of an apparatus 100 for determining a classifier for identifying objects in an image.

The apparatus 100 for determining a classifier 130 for identifying objects in an image is configured to receive a preliminary annotation 110 for pixels of the image and to transform the preliminary annotation to an enhanced annotation 120. While the preliminary annotation 110, the enhanced annotation 120, and the classifier 130 may be implemented by means of hardware or software, those features are illustrated by means of functional blocks within the apparatus 100 in fig. 1 for the purpose of the following description.

The preliminary annotation 110 comprises annotations for pixels to belong to an object or to background and the enhanced annotation 120 comprises annotations for pixels to belong to a transition between the background and an object, and/or annotations for a pixel to belong to a transition between objects. An annotation is supplementary information available for pixels of an image that characterize the pixel as belonging to a particular group or class. In the event of the preliminary annotation 110, there is two groups of pixels characterized, the first group being the pixels that belong to an object and the second group being the pixels that belong to background. In the event of the enhanced annotation 120, there is at least an additional third group, the third group eventually being the pixels at a transition between an object and the background. Optionally, the additional third group may be the pixels at a transition between different objects. Further optionally, the enhanced annotation 120 may additionally comprise both additional groups, i.e. a third group being the pixels at a transition between an object and the background and a fourth group being the pixels at a transition between different objects.

The annotations may be made available by arbitrary means, for example as an additional file to be loaded and to be processed together with the corresponding image or the annotation may also be stored together with the image as a single file. The preliminary annotation 110 may also be input or generated by a user of the apparatus, who manually marks regions within the image that appear to belong to an object and, likewise, regions that appear to belong to background. Alternatively, the preliminary annotation 110 may also, be read from an already existing file or be stored within the image to be processed.

The enhanced annotation 120 can, for example, be generated automatically from the preliminary annotation 110. There are principally arbitrary different ways to create an enhanced annotation 120 comprising the additional annotations. One particular example to determine the enhanced annotation 120 based on the preliminary 110 annotation may, for example, use the following criteria.

A pixel may be annotated as being background in the enhanced annotation 120 if the same pixel is also marked as background in the preliminary annotation 110 and if it does not have a pixel annotated (in the preliminary annotation 110) as belonging to an object in a neighborhood of 3x3 pixels.

A pixel may be annotated as being an object in the enhanced annotation 120 if the same pixel is not annotated as background in the preliminary annotation 110 and if it does not have a pixel annotated (in the preliminary annotation 110) as belonging to another object in a 3x3 neighborhood.

A pixel may be annotated as belonging to a transition between an object and the background in the enhanced annotation 120 if the same pixel is marked or annotated as background in the preliminary annotation 110 and if it does have a pixel annotated (in the preliminary annotation 110) as belonging to an object in a 3x3 neighborhood. Likewise, a pixel may be annotated as belonging to a transition between an object and the background in the enhanced annotation 120 if the same pixel is annotated as object in the preliminary annotation 110 and if it does have a pixel annotated (in the preliminary annotation 110) as background in a 3x3 neighborhood.

A pixel may be annotated as belonging to a transition between objects in the enhanced annotation 120 if the same pixel is marked as object in the preliminary annotation 110 and if at least one pixel is annotated (in the preliminary annotation 110) as belonging to another object in a 3x3 neighborhood and if the 3x3 neighborhood does not have pixels annotated as background.

With the enhanced annotation 120 generated, the apparatus 100 determines the classifier 130 based on the enhanced annotation 120 and on a representation of the pixels of the image. The enhanced annotation 120 comprises a more detailed characterization of the individual pixels within the image, resulting in the capability to determine the classifier 130 such that it classifies the pixels more precisely as compared to a classifier being determined or trained based using the preliminary annotation 110. The generated classifier 130 may provide, as an output, a classification for every pixel indicating, whether the pixel belongs to background or to an obj ect.

The determination of the classifier 130 may be based on machine learning. For machine learning, a labeled training data set is required, which is given by the image itself or by an associated representation of the image together with the preliminary annotation 110 according to an embodiment of the invention. However, according to an embodiment, machine learning is not directly based on that labeled data set. Instead, the labeled data set is modified to support better machine learning afterwards. In particular, the preliminary annotation 110 is transformed in the enhanced annotation 120 to enable reliable machine learning based on the available training data using the enhanced annotation 120. Using machine learning, embodiments of the invention may avoid any manual input of parameter values, as it may be required in conventional approaches so that a user of the system does not need to be aware of the way the algorithm and the associated apparatus works and how it classifies the pixels.

According to the previously described embodiments, the classifier 130 is determined using the enhanced annotation 120 and the representation of the pixels of the image. There is arbitrary ways to generate a representation of the pixels of the image that can be used to determine the classifier 130, including the possibility to use the gray values of the pixels of the image as originally determined as the sole representation of a pixel. Further embodiments, however, may apply filters to the image (which was, for example, taken by a camera within a microscope) to generate a representation of the image used for the determination of a classifier 130. While some embodiments may apply a single filter to generate the representation of a pixel, other embodiments may apply multiple filters. If a single filter is applied, a representation of a pixel comprises a single quantity, corresponding to the gray value of the pixel in the filtered image. If multiple filters are applied, a representation of a pixel may comprise multiple quantities or numbers, one for each filter used. In this event, a representation of a pixel may be a feature vector having multiple elements, each element being the gray value of the pixel after the application of one particular filter and the classifier 130 is determined using the feature vectors of the pixel of the image. While arbitrary combinations of filters are feasible to arrive at appropriate feature vectors, one particular choice is the use of the following filters, while each filter is furthermore used multiple times with different parameters given in the following table.

| Filter | Parameters |
|---|---|
| Gaussian | $\sigma \in \{0.3, 0.7, 1.0, 1.6, 3.5, 5.0, 10.0\}$ |
| Gaussian with $\sigma_2$ is subtracted from the Gaussian with $\sigma_1$. | $\sigma_1 \in \{0.7, 1.0, 1.6, 3.5, 5.0, 10.0\}$, $\sigma_2 = 1.6\sigma_1$ |
| Gaussian gradient magnitude | $\sigma \in \{0.7, 1.0, 1.6, 3.5, 5.0, 10.0\}$ |
| Laplacian of Gaussians | $\sigma \in \{0.7, 1.0, 1.6, 3.5, 5.0, 10.0\}$ |
| Largest structure tensor eigenvalue | $\sigma \in \{0.7, 1.0, 1.6, 3.5, 5.0, 10.0\}$ |
| Largest Hessian matrix eigenvalue | $\sigma \in \{0.7, 1.0, 1.6, 3.5, 5.0, 10.0\}$ |

Irrespective of the used representation of the pixels of an image, arbitrary machine learning models can be used to determine the classifier 130. One particular choice may be the use of a random forest. Of course, other statistical classifiers can be used as well. The random forest may, for example, have 100 decision trees. Further embodiments may likewise use a random forest with a smaller or with a greater number of decision trees.

According to some embodiments, the classifier is trained using the representation of the pixels and the enhanced annotation of a subset of the pixels of the image while other pixels not belonging to the subset can be used for testing. For example, an identical number of pixels for each class or annotation can be selected initially and 50% of all selected pixels are used for classifier training, while the remaining 50% are used for test.

According to further embodiments, a probability map is furthermore determined that indicates a probability for pixels within the image to belong to an object. The probability map comprises data indicating the probability that individual pixels within the image belong to an object. The information may be present for all pixels of the image or only for a fraction of the pixels. The probability map can be determined after the training of the classifier or as part of the training, using the classifier of the present training step and the representation of the pixels of the image. If for example, a random forest is used as a classifier model, the output of the different decision trees of the random forest can be evaluated to compute the probability of every pixel to belong to an object.

Once the classifier 130 is determined or trained, it may use only an image, an image together with a preliminary annotation or an image together with the enhanced annotation as an input to determine the pixels belonging to an object. To use the trained classifier 130 together with other images, the parameters completely describing the trained classifier can be stored. While the number and type of parameters that unambiguously describe a trained classifier are different and depend one the choice of the machine learning model (the type of the classifier), it is clear that all those parameters can be stored to reconstruct the rained classifier for reuse with or images or systems.

In the event that a probability map is computed while training or determining the classifier, the determination of a threshold indicating that a pixel having a probability above the threshold belongs to an object may optionally also be performed within an apparatus 100 once the classifier 130 is determined. Once the threshold is determined, it may be stored for reuse with the trained classifier 130 to analyze further images.

Details as to how the threshold may be generated are subsequently discussed together with the apparatus 200 of fig. 2 since the threshold may also be determined independently from the determination of the classifier itself, i.e. when reusing a trained classifier 130 on other images to identify objects in an image.

An algorithm to determine a classifier 130 by means of apparatus 100 may in other words be summarized as follows. Optionally, filters may be applied to determine the representation the pixels of an image. Feature vectors are created for the pixels, which may be marked and annotated by a user to provide the preliminary annotation. The user generated preliminary annotation is transformed to the enhanced annotation and a random forest classifier is trained. Optionally, an object pixel probability map is computed. Further optionally, a threshold for a probability may be determined.

Fig. 2 schematically illustrates an embodiment of an apparatus 200 for identifying objects in an image.

The apparatus determines a probability map 210 indicating a probability for pixels within an image to belong to an object. The determination is based on a classifier determined as illustrated above and on the representation of the pixels of the image used to train the classifier.

The used classifier has been trained to operate on the chosen representation of the pixels, that is, the same representation of the pixels has been used for the determination of the classifier that is already used as an input to or that is generated by means of apparats 200.

An output of the apparatus is the information, if a pixel of the image belongs to an object, requiring to further evaluate the probability map to determine said information. Therefore, the apparatus is further configured to derive pixels belonging to an object using the probability map and the preliminary annotation that comprises annotations for pixels to belong to an object or to background. Unlike conventional approaches, the apparatus 200 does not only evaluate the probability map alone to determine, whether a pixel belongs to an object. Instead, the apparatus 200 additionally uses the preliminary annotation which further comprises said information, although eventually in another form. Combining both informations, the accuracy of the determination whether a pixel belongs to an object can be increased.

The apparatus 200 is configured to determine a metric that is based on a relation of the pixels having a probability above a threshold and the pixels having a preliminary annotation to belong to an object to combine both sources of information. The threshold is used to indicate that a pixel having a probability above the threshold belongs to an object. The apparatus is further configured to vary the threshold until the metric fulfills a predetermined criterion, ending up with a threshold that is automatically chosen to fit the particular image analyzed. For subsequent images - even from the same source - different thresholds may so be determined to fit each individual image best.

Some embodiments may vary the threshold until the metric is maximized. To do so, the threshold can, for example, be determined by a direct search or pattern search. An initial value and an initial step size are chosen. Neighbors to the current threshold are generated adding and subtracting the step size to the current value. If a neighbor is better than the current value, the best neighbor becomes the new current threshold, and the step size is multiplied by an expansion factor greater than one. If no neighbor is better than the current threshold, the step size is divided by the expansion factor. The initial threshold may be determined arbitrarily, for example by the method of Otsu. The expansion factor can be chosen arbitrarily as well, for example to be two. The initial step size can also be chosen within a wide range of values, on particular choice being to choose it as big as possible while assuring that both initial neighbors are in the interval [0, 1]. Summarizing the optimization, an initial threshold and an initial step size are determined. The segmentation accuracy for the current threshold, (current threshold + step size) and (current threshold - step size) are computed. If the segmentation accuracy for the initial threshold is higher than for the other thresholds, the step size is decreased. If the segmentation accuracy is better for another threshold, the threshold with the best segmentation accuracy becomes the new current threshold and the step size is increased. The algorithm terminates when the step size becomes smaller than or equal to a minimal value.

According to some embodiments, the average Dice coefficient D of all objects in the image is used as the metric. The Dice coefficient D is a measure for the similarity of the classification according to the preliminary annotation (subsequently denoted A) and the classification resulting from applying the threshold (subsequently denoted B).

The Dice coefficient D with respect to a single object according to the preliminary annotation (e.g. marked by a user) is defined as:

$$ D = 2\frac{|A \cap B|}{|A \cup B|} $$

where *A* is the set of all pixels that belong to the marked object and *B* is the set of all pixels that belong to intersecting detected objects which are derived from applying the threshold. If there is no intersecting object, *D* is zero. If exactly one detected object is identical to the marked object, *D* is one.

In order to compute a Dice coefficient, one may define that contiguous regions of object pixels are considered as objects and to distinguish between different objects. For example, all pixels that belong to the background may have a gray value of one in the result image. The gray values of object pixels may be integer numbers greater than one. Pixels that belong to the same object have the same gray value. Pixels that belong to different objects have different gray values.

Using the dice coefficient to determine the threshold, therefore, may assure maximum concordance between the preliminary annotation and the determination made using the threshold and so arrive at a properly chosen threshold for a particular image or for a particular series of images.

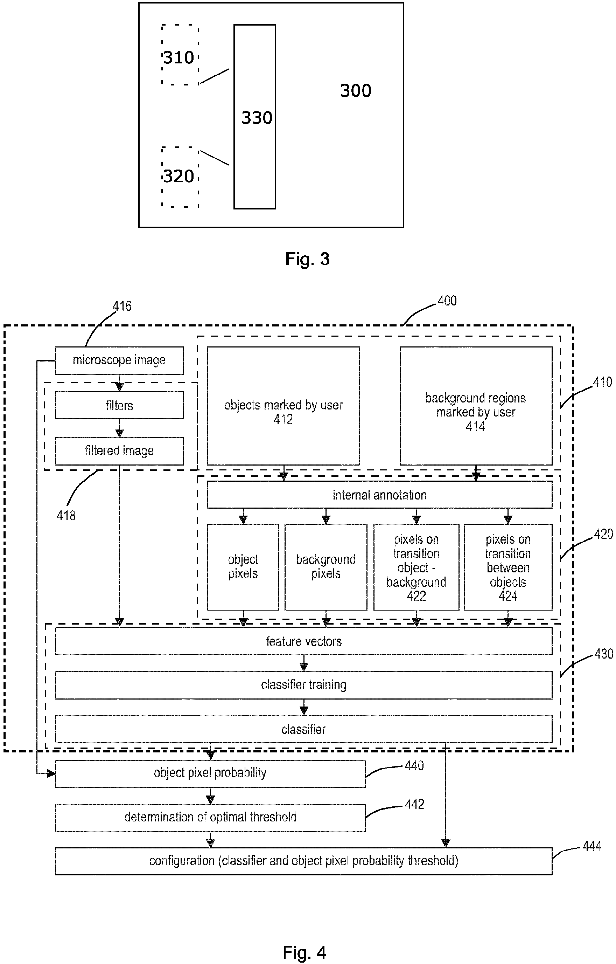

The determination of the threshold may also be performed independently from the determination of the probability map, which may be determined upfront and provided as an input to a respective apparatus together with the corresponding representation of the pixels. Fig. 3 schematically illustrates a corresponding apparatus 300 for identifying objects in an image.

The apparatus identifies objects 300 in an image based on a probability map 310 and on a preliminary annotation 320 for pixels of the image. The apparatus is configured to vary a threshold 330 indicating that a pixel having a probability above the threshold belongs to an object until a metric fulfills a predetermined criterion, the metric being based on a relation of the pixels having a probability above the threshold and the pixels having a preliminary annotation to belong to an object.

The determination of the threshold can be performed as discussed with respect to the apparatus 200 of fig. 2 and may, for example, comprise computing an average dice coefficient of all objects in the image as the metric.

Fig. 4 illustrates a flowchart of an embodiment of a method for determining a classifier 400 for identifying objects in an image as it may be performed in an apparatus 100. Details regarding the individual processing steps are, therefore, already discussed with respect to fig. 1 and not repeated in the following concise description of the flowchart. In the flow chart of fig. 4 it is assumed that objects are to be identified in fluorescence images made using a microscope. However, further embodiments may also be used to identify objects in arbitrary other images and applications.

The method comprises receiving a preliminary annotation 410 for pixels of an image, the preliminary annotation comprising annotations for pixels to belong to an object 412 or to background 414. The preliminary annotation 410 may be loaded from a file or it may, alternatively, be manually generated or input by a user of a microscope system. To this end, the microscope system may provide a user interface enabling a user to mark or annotate individual pixels within an image.

The image itself and its representation may, likewise, be generated upfront and read from a memory. Alternatively, it may be taken by a user from the system using the microscope. To this end, the flowchart of fig. 4 also illustrates the optional steps of receiving a generating microscope image 416 and of generating the representation 418 of pixels of the image by means of the chosen filters.

According to the method, the preliminary annotation 410 is used to generate an enhanced annotation 420. The enhanced annotation further comprising at least one of annotations for pixels to belong to a transition between the background and an object 422, and annotations for pixel to belong a transition between objects 424.

As illustrated in fig. 4, determining the classifier 430 is based on the enhanced annotation 420 and on the representation 418 of the pixels of the image. In the illustrated embodiment, the classifier is determined using machine learning to train a random forest for the classification of the objects within the representations 418 of the image.

As already described with respect to the apparatus 100, also the flowchart of fig. 4 illustrates the optional steps of determining a probability map 440 and of determining an optimal threshold 442. Further, in an optional step 444, the configuration of the trained classifier can be stored for later reuse. Optionally, the stored configuration may also comprise information about the determined threshold.

For determining objects in fluorescence images of a microscope, the object detection algorithm may in other words be summarized in the following way. Several filters are applied to a fluorescence image. For each pixel of the fluorescence image a feature vector is created from the intensities of the corresponding pixels of the filtered images. A random forest classifier takes the feature vectors as inputs and computes a probability map, i.e. for each pixel the probability of belonging to an object is determined. Each pixel for which the probability exceeds a threshold is considered as an object pixel. Contiguous regions of object pixels are considered as objects. All pixels that belong to the background have the gray value one in the result image. The gray values of object pixels are integer numbers greater than one. Pixels that belong to the same object have the same gray value. Pixels that belong to different objects have different gray values.

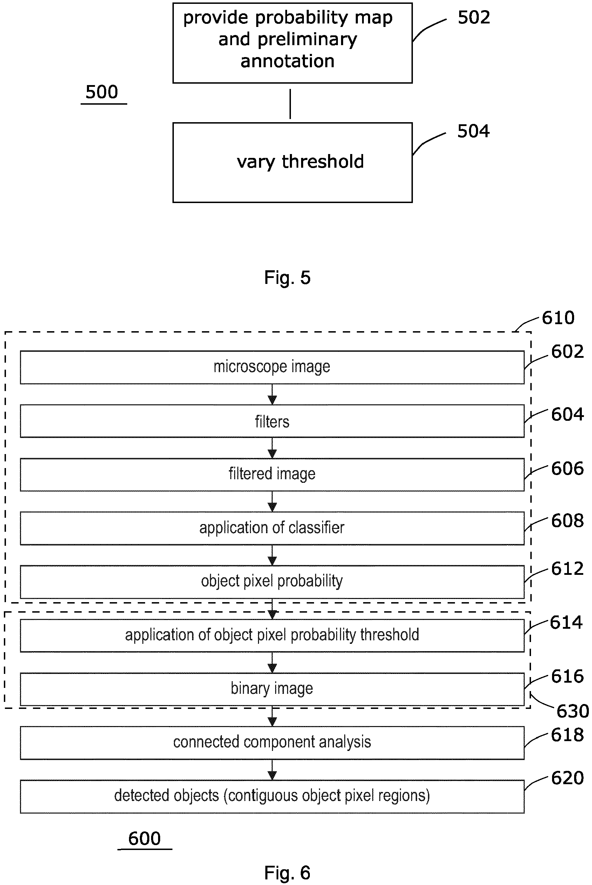

Fig. 5 illustrates a flowchart of an embodiment of a method for identifying objects in an image as it may be performed in one of the apparatuses 200 or 300.

The method 500 uses a probability map and on a preliminary annotation for pixels of the image, the probability map indicating a probability for pixels within the image to belong to an object, and the preliminary annotation comprising annotations for pixels to belong to an object or to background. In step 502, the probability map and the preliminary annotation are generated, loaded or provided by any other means.

Further, the method comprises varying a threshold 504 indicating that a pixel having a probability above the threshold belongs to an object until a metric fulfills a predetermined criterion, the metric being based on a relation of the pixels having a probability above the threshold and the pixels having a preliminary annotation to belong to an object.

Fig. 6 illustrates a flowchart of a further embodiment of a method for identifying objects in an image.

The method comprises determining a probability map 610 indicating a probability for pixels within an image to belong to an object using a trained classifier. In the embodiment illustrated in fig., determining the probability map 610 comprises the optional steps of generating microscope image 602 and of filtering the image 604 in order to generate the representation of the pixels 606. To generate the probability map 612, the pre-trained classifier 608 is applied.

Further, the method comprises deriving pixels 630 belonging to an object using the probability map and a preliminary annotation, the preliminary annotation comprising annotations for pixels to belong to an object or to background. In the embodiment illustrated in fig. 6, deriving the pixels 630 comprises optimizing the threshold 614 used to generate a binary image 616, the binary image comprising the information, as to whether a pixel is determined to belong to an object or not.

Fig. 6 also illustrates the optional steps of defining the objects within the image. To this end, a connected components analysis 618 may be performed in order to group the pixels that are determined to be an object and that are directly neighboring one another. The objects may be determined in step 620 by assigning the separated groups of pixels to the same object.

In other words, fig. 6 illustrates a flowchart of an algorithm for object detection. Several filters are applied to a microscope image. For each pixel a vector containing the corresponding gray values of the filtered images is generated. This is called a "feature vector". The classifier assigns a probability of belonging to an object to each pixel. All pixels with an object pixel probability greater than this threshold are considered objects pixels. Contiguous regions of object pixels are considered as objects.

One particular implementation of the previously described embodiments may determine and optionally classify objects in images in the following way. Contiguous object pixel regions marked (annotated) by a user are considered as whole objects. The user markings are transformed to an internal annotation that takes transitions between objects and background and boarders of adjacent objects into consideration. The internal or preliminary annotation is applied when training a classifier. The classifier is used to compute an object probability map. The object probability map is thresholded. The threshold is determined so the average Dice coefficient with respect to the objects marked by the user is maximized. Thus, object detection becomes more accurate when compared to object detection by pixel classification alone.

It is difficult to guess an appropriate object probability threshold. Therefore, it is desirable to determine it automatically. This can be done by an optimization algorithm that meets the following conditions. It can be applied to a single scalar variable. It is free of derivatives and an optimal or near-optimal objective function value can be achieved within a few iterations. A direct search algorithm may be used to find an optimal threshold. Direct uses an initial value. This initial value usually is a random number or a vector of random numbers. Therefore, direct search is a stochastic optimization method.

Some implementations are based on an algorithm that detects and optionally classifies cells, organelles or multi-cellular organisms in fluorescence images. The algorithm is based on user annotations of object and background.

If the user also assigns classes to the marked objects, the classification of detected objects may optionally be learned as well.

Embodiments of the invention may be used with arbitrary images showing arbitrary object. One particular application may be the detection of objects in fluorescence images. Those objects can, for example, be microorganism or organelles in a probe using a microscope.

Embodiments of microscopes may, therefore, comprise an embodiment of an apparatus 100, 200 or 300 or be capable to execute an embodiment of a method 300 or 400. In further embodiments, the apparatus 100, 200 or 300 may not be implemented in the microscope but the microscope may be configured to interface with an apparatus 100, 200 or 300. Likewise, the microscope may not directly execute the method 300 or 400 but be capable to interface with an external entity execute the method. For example, the microscope may be capable to interface with an external hardware or computer system executing the method and the processing steps of, for example, machine learning or using a classifier, while the microscope controls the processing. The control of the processing may, for example, be performed using a graphical user interface of the microscope to mark regions within an image for generating the preliminary annotation or to select previously determined classifiers.

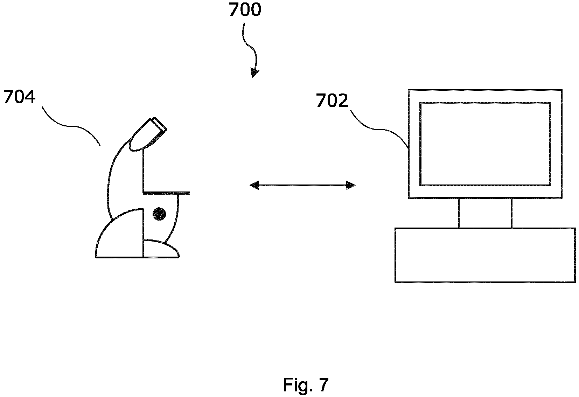

Fig. 7 illustrates an embodiment of a microscope system 700 that may be used together with an apparatus or a method as described herein. The system 700 comprises a microscope 704 and an apparatus or a computer 702. The microscope 700 is configured to interface with the apparatus 702 in order to control the apparatus 702 or the methods performed by means of the apparatus 702. In particular, any of the previously described methods 400, 500, or 600 may be performed by the apparatus 702 under control of the microscope 704. In other words, the apparatus 702 may embody one or all of the apparatuses 100, 200, or 300 as previously described.

In other words, some embodiments relate to a microscope comprising a system as described in connection with one or more of the Figs. 1 to 6. Alternatively, a microscope may be part of or connected to a system as described in connection with one or more of the Figs. 1 to 6. Fig. 7 shows a schematic illustration of a system 700 configured to perform a method described herein. The system 700 comprises a microscope 704 and a computer system 702. The microscope 704 is configured to take images and is connected to the computer system 702. The computer system 702 is configured to execute at least a part of a method described herein. The computer system 702 may be configured to execute a machine learning algorithm. The computer system 702 and microscope 704 may be separate entities but can also be integrated together in one common housing. The computer system 702 may be part of a central processing system of the microscope 704 and/or the computer system 702 may be part of a subcomponent of the microscope 704, such as a sensor, an actor, a camera or an illumination unit, etc. of the microscope 704.

The computer system 702 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 702 may comprise any circuit or combination of circuits. In one embodiment, the computer system 702 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 702 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 702 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 702 may also include a display device, one or more speakers, and a keyboard and/or controller, which can include a mouse, trackball, touch screen, voice-recognition device, or any other device that permits a system user to input information into and receive information from the computer system 702.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are.

Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

**List of reference Signs**

| | |
|---|---|
| 100 | apparatus for determining a classifier |
| 110 | reception of preliminary annotation |
| 120 | transformation of the preliminary annotation |
| 130 | determination of classifier |
| 200 | apparatus for identifying objects |
| 210 | determination of probability map |
| 220 | derivation of pixels belonging to an object |
| 300 | apparatus for identifying objects |
| 310 | probability map |
| 320 | preliminary annotation |
| 330 | variation of threshold |
| 400 | flowchart of a method for determining a classifier |
| 410 | receiving a preliminary annotation |
| 412 | annotation for pixels to belong to an object |
| 414 | annotation for pixels to belong to background |
| 416 | receive or generate image |
| 418 | determine representation of pixels of image |
| 420 | transforming the preliminary annotation |
| 430 | determining classifier |
| 440 | determining probability map |
| 442 | determine threshold |
| 444 | storing configuration |
| 500 | method for identifying objects in an image |
| 502 | provide probability map and the preliminary annotation generated |
| 504 | varying threshold |
| 600 | method for identifying objects in an image |
| 602 | generating microscope image |
| 604 | filtering microscope image |
| 606 | using filtered images |
| 608 | applying classifier |
| 610 | determining a probability map |
| 612 | generate probability map |
| 614 | optimizing threshold |
| 616 | generating binary image |
| 618 | perform connected components analysis |
| 620 | determine objects |
| 630 | derive pixels belonging to an object |
| 700 | microscope system |
| 702 | apparatus or computer |
| 704 | microscope |

**Claims**

**1.** An apparatus (100) for determining a classifier for identifying objects in an image, configured to:

receive a preliminary annotation (110) for pixels of the image, the preliminary annotation comprising annotations for pixels to belong to an object or to background;
transform the preliminary annotation to an enhanced annotation (120), the enhanced annotation further comprising at least one of:

annotations for pixels to belong to a transition between the background and an object, and
annotations for pixel to belong to a transition between objects; and

determine (130) a classifier based on the enhanced annotation and a representation of the pixels of the image.

2. The apparatus of claim 1, wherein the classifier is a random forest.

3. The apparatus of one of claims 1 or 2, further configured to train the classifier using the representation and the enhanced annotation of a subset of the pixels of the image.

4. The apparatus of one of claims 1 to 3, further configured to determine a probability map indicating a probability for pixels within an image to belong to an object using the classifier and the representation of the pixels of the image.

5. An apparatus (200) for identifying objects in an image, configured to:

determine a probability map (210) indicating a probability for pixels within an image to belong to an object based on a classifier of one of claims 1 to 4 and on a representation of the pixels of the image; and
to derive pixels (220) belonging to an object using the probability map and a preliminary annotation, the preliminary annotation comprising annotations for pixels to belong to an object or to background.

6. The apparatus of claim 5, configured to vary a threshold indicating that a pixel having a probability above the threshold belongs to an object until a metric fulfills a predetermined criterion, the metric being based on a relation of the pixels having a probability above the threshold and the pixels having a preliminary annotation to belong to an object.

7. The apparatus of claim 6, configured to compute an average Dice coefficient of all objects in the image as the metric.

8. The apparatus of claim 6 or 7, further configured to
vary the threshold until the metric is maximized.

9. An apparatus for identifying objects (300) in an image based on a probability map (310) and on a preliminary annotation (320) for pixels of the image, the probability map indicating a probability for pixels within the image to belong to an object, and the preliminary annotation comprising annotations for pixels to belong to an object or to background, the apparatus being configured to:
vary a threshold (330) indicating that a pixel having a probability above the threshold belongs to an object until a metric fulfills a predetermined criterion, the metric being based on a relation of the pixels having a probability above the threshold and the pixels having a preliminary annotation to belong to an object.

10. The apparatus of claim 9, configured to compute an average dice coefficient of all objects in the image as the metric.

11. A method for determining a classifier (400) for identifying objects in an image, comprising:

receiving a preliminary annotation (410) for pixels of the image, the preliminary annotation comprising annotations for pixels to belong to an object or to background;
transforming the preliminary annotation (420) to an enhanced annotation, the enhanced annotation further comprising at least one of:

annotations for pixels to belong to a transition between the background and an object, and
annotations for pixel to belong a transition between objects; and

determining the classifier (430) using the enhanced annotation and a representation of the pixels of the image.

12. The method of claim 11, further comprising training the classifier using the representation and the enhanced annotation of a subset of the pixels of the image.

**13.** A method for identifying objects in an image (500) based on a probability map and on a preliminary annotation for pixels of the image, the probability map indicating a probability for pixels within the image to belong to an object, and the preliminary annotation comprising annotations for pixels to belong to an object or to background, comprising: varying a threshold (502) indicating that a pixel having a probability above the threshold belongs to an object until a metric fulfills a predetermined criterion, the metric being based on a relation of the pixels having a probability above the threshold and the pixels having a preliminary annotation to belong to an object.

**14.** The method of claim 13, further comprising computing an average Dice coefficient of all objects in the image as the metric.

**15.** A computer program having a program code causing execution of a method according to one of claims 11 to 14 if the program code is executed on a programmable processor.

Amended claims in accordance with Rule 137(2) EPC.

**1.** An apparatus (100) for training a classifier for classifying objects in an image, configured to:

receive a preliminary annotation (110) for pixels of the image, the preliminary annotation comprising annotations for pixels to belong to an object or to background;
transform the preliminary annotation to an enhanced annotation (120), the enhanced annotation further comprising at least one of:

annotations for pixels to belong to a transition between the background and an object, and
annotations for pixel to belong to a transition between objects;

train (130) a classifier based on the enhanced annotation and a representation of the pixels of the image;
determine a probability map indicating a probability for pixels within an image to belong to an object using the classifier and the representation of the pixels of the image;
vary a threshold indicating that a pixel having a probability above the threshold belongs to an object until a metric fulfills a predetermined criterion, the metric being based on a relation of the pixels having a probability above the threshold and the pixels having a preliminary annotation to belong to an object; and
compute an average Dice coefficient of all objects in the image as the metric.

**2.** The apparatus of claim 1, wherein the classifier is a random forest.

**3.** The apparatus of one of claims 1 or 2, further configured to train the classifier using the representation and the enhanced annotation of a subset of the pixels of the image.

**4.** An apparatus (200) for classifying objects in an image, configured to:

determine a probability map (210) indicating a probability for pixels within an image to belong to an object based on a classifier and on a representation of the pixels of the image;
to derive pixels (220) belonging to an object using the probability map and a preliminary annotation, the preliminary annotation comprising annotations for pixels to belong to an object or to background;
vary a threshold indicating that a pixel having a probability above the threshold belongs to an object until a metric fulfills a predetermined criterion, the metric being based on a relation of the pixels having a probability above the threshold and the pixels having a preliminary annotation to belong to an object; and
compute an average Dice coefficient of all objects in the image as the metric;
wherein the classifier is trained based on an enhanced annotation and a representation of the pixels of the image, the enhanced annotation derived from transformation of the preliminary annotation, the enhanced annotation further comprising at least one of:

annotations for pixels to belong to a transition between the background and an object, and
annotations for pixel to belong to a transition between objects.

**5.** The apparatus of claim 4, further configured to
vary the threshold until the metric is maximized.

6. An apparatus for classifying objects (300) in an image based on a probability map (310) and on a preliminary annotation (320) for pixels of the image, the probability map indicating a probability for pixels within the image to belong to an object, and the preliminary annotation comprising annotations for pixels to belong to an object or to background, the apparatus being configured to:

vary a threshold (330) indicating that a pixel having a probability above the threshold belongs to an object until a metric fulfills a predetermined criterion, the metric being based on a relation of the pixels having a probability above the threshold and the pixels having a preliminary annotation to belong to an object; and
compute an average dice coefficient of all objects in the image as the metric.

7. A method for training a classifier (400) for classifying objects in an image, comprising:

receiving a preliminary annotation (410) for pixels of the image, the preliminary annotation comprising annotations for pixels to belong to an object or to background;
transforming the preliminary annotation (420) to an enhanced annotation, the enhanced annotation further comprising at least one of:

annotations for pixels to belong to a transition between the background and an object, and
annotations for pixel to belong a transition between objects; and

training the classifier (430) using the enhanced annotation and a representation of the pixels of the image;
determining a probability map indicating a probability for pixels within an image to belong to an object using the classifier and the representation of the pixels of the image;
varying a threshold indicating that a pixel having a probability above the threshold belongs to an object until a metric fulfills a predetermined criterion, the metric being based on a relation of the pixels having a probability above the threshold and the pixels having a preliminary annotation to belong to an object; and
computing an average Dice coefficient of all objects in the image as the metric.

8. The method of claim 7, further comprising training the classifier using the representation and the enhanced annotation of a subset of the pixels of the image.

9. A method for classifying objects in an image (500) based on a probability map and on a preliminary annotation for pixels of the image, the probability map indicating a probability for pixels within the image to belong to an object, and the preliminary annotation comprising annotations for pixels to belong to an object or to background, comprising:

varying a threshold (502) indicating that a pixel having a probability above the threshold belongs to an object until a metric fulfills a predetermined criterion, the metric being based on a relation of the pixels having a probability above the threshold and the pixels having a preliminary annotation to belong to an object; and
computing an average Dice coefficient of all objects in the image as the metric.

10. A computer program having a program code causing execution of a method according to one of claims 7 to 9 if the program code is executed on a programmable processor.

110

120

130

100

Fig. 1

200

210

220

Fig. 2

310

320

330

300

**Fig. 3**

416

400

microscope image

filters

filtered image

418

objects marked by user
412

background regions
marked by user
414

410

internal annotation

object
pixels

background
pixels

pixels on
transition
object -
background
422

pixels on
transition
between
objects
424

420

feature vectors

classifier training

classifier

430

object pixel probability

440

determination of optimal threshold

442

configuration (classifier and object pixel probability threshold)

444

**Fig. 4**

```
┌─────────────────────────┐
│   provide probability map │ ╭─ 502
│      and preliminary      │
│        annotation         │
└─────────────────────────┘
```

500

```
            │
┌─────────────────────────┐
│                           │ ╭─ 504
│      vary threshold       │
│                           │
└─────────────────────────┘
```

## Fig. 5

```
╭─ 610
┌ ─ ─ ─ ─ ─ ─ ─ ─ ─ ─ ─ ─ ─ ─ ─ ┐
│ ┌─────────────────────────────┐ │ ╭─ 602
│ │      microscope image        │ │
│ └─────────────────────────────┘ │
│              ↓                   │
│ ┌─────────────────────────────┐ │ ╭─ 604
│ │          filters             │ │
│ └─────────────────────────────┘ │
│              ↓                   │
│ ┌─────────────────────────────┐ │ ╭─ 606
│ │       filtered image         │ │
│ └─────────────────────────────┘ │
│              ↓                   │
│ ┌─────────────────────────────┐ │ ╭─ 608
│ │   application of classifier  │ │
│ └─────────────────────────────┘ │
│              ↓                   │
│ ┌─────────────────────────────┐ │ ╭─ 612
│ │    object pixel probability  │ │
│ └─────────────────────────────┘ │
└ ─ ─ ─ ─ ─ ─ ─ ─ ─ ─ ─ ─ ─ ─ ─ ┘
               ↓
┌ ─ ─ ─ ─ ─ ─ ─ ─ ─ ─ ─ ─ ─ ─ ─ ┐
│ ┌─────────────────────────────┐ │ ╭─ 614
│ │ application of object pixel  │ │
│ │      probability threshold   │ │
│ └─────────────────────────────┘ │
│              ↓                   │ ╭─ 616
│ ┌─────────────────────────────┐ │
│ │        binary image          │ │ ╭─ 630
│ └─────────────────────────────┘ │
└ ─ ─ ─ ─ ─ ─ ─ ─ ─ ─ ─ ─ ─ ─ ─ ┘
               ↓
┌─────────────────────────────────┐ ╭─ 618
│   connected component analysis   │
└─────────────────────────────────┘
               ↓                      ╭─ 620
┌─────────────────────────────────┐
│ detected objects (contiguous object pixel regions) │
└─────────────────────────────────┘
```

600

## Fig. 6

Fig. 7

Europäisches
Patentamt

European
Patent Office

Office européen
des brevets

**EUROPEAN SEARCH REPORT**

Application Number

EP 20 16 8790

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUAN C. CAICEDO ET AL: "Evaluation of Deep Learning Strategies for Nucleus Segmentation in Fluorescence Images", NIH PUBLIC ACCESS AUTHOR MANUSCRIPT, vol. 95, no. 9, 16 July 2019 (2019-07-16), pages 952-965, XP055730122, ISSN: 1552-4922, DOI: 10.1002/cyto.a.23863 * the whole document * | 1-4,11, 12,15 | INV. G06K9/00 G06K9/34 G06K9/62 G06T7/00 G06T7/136 G06T7/194 |
| A | BERG STUART ET AL: "ilastik: interactive machine learning for (bio)image analysis", NATURE METHODS, NATURE PUB. GROUP, NEW YORK, vol. 16, no. 12, 30 September 2019 (2019-09-30), pages 1226-1232, XP036929815, ISSN: 1548-7091, DOI: 10.1038/S41592-019-0582-9 [retrieved on 2019-09-30] * figure 1a * | 1-4,11, 12,15 | ADD. G06K9/46 G01N21/64 |
| A | DAVID A. VAN VALEN ET AL: "Deep Learning Automates the Quantitative Analysis of Individual Cells in Live-Cell Imaging Experiments", PLOS COMPUTATIONAL BIOLOGY, vol. 12, no. 11, 4 November 2016 (2016-11-04), page e1005177, XP055503466, DOI: 10.1371/journal.pcbi.1005177 * figure 1 * | 1-4,11, 12,15 | TECHNICAL FIELDS SEARCHED (IPC) G06K G06T G01N |

-/--

The present search report has been drawn up for all claims

| Place of search | Date of completion of the search | Examiner |
|---|---|---|
| The Hague | 9 October 2020 | Hermes, Lothar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 20 16 8790

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SETH NIKHIL ET AL: "Automated Segmentation of DCIS in Whole Slide Images", 3 July 2019 (2019-07-03), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 67 - 74, XP047512563, ISBN: 978-3-319-10403-4 [retrieved on 2019-07-03] * the whole document * | 5-10, 13-15 | |
| A | ROBBEN DAVID ET AL: "A Voxel-Wise, Cascaded Classification Approach to Ischemic Stroke Lesion Segmentation", 5 October 2015 (2015-10-05), BIG DATA ANALYTICS IN THE SOCIAL AND UBIQUITOUS CONTEXT : 5TH INTERNATIONAL WORKSHOP ON MODELING SOCIAL MEDIA, MSM 2014, 5TH INTERNATIONAL WORKSHOP ON MINING UBIQUITOUS AND SOCIAL ENVIRONMENTS, MUSE 2014 AND FIRST INTERNATIONAL WORKSHOP ON MACHINE LE, XP047358819, ISBN: 978-3-642-17318-9 * abstract * * Sect. 2.5 * | 5-10, 13-15 | |

TECHNICAL FIELDS
SEARCHED     (IPC)

-/--

The present search report has been drawn up for all claims

| Place of search | Date of completion of the search | Examiner |
|---|---|---|
| The Hague | 9 October 2020 | Hermes, Lothar |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Alessandra M. Valcarcel ET AL: "TAPAS: A Thresholding Approach for Probability Map Automatic Segmentation in Multiple Sclerosis", bioRxiv, 22 April 2019 (2019-04-22), pages 1-23, XP055737993, DOI: 10.1101/609156 Retrieved from the Internet: URL:https://www.biorxiv.org/content/10.1101/609156v1.full.pdf [retrieved on 2020-10-08] * abstract * * Sect. 2.2 * | 5-10, 13-15 | |
| | ----- | | |
| | | | TECHNICAL FIELDS SEARCHED (IPC) |

The present search report has been drawn up for all claims

| Place of search | Date of completion of the search | Examiner |
|---|---|---|
| The Hague | 9 October 2020 | Hermes, Lothar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 20 16 8790

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 20 16 8790

The Search Division considers that the present European patent application does not comply with the requirements of unity of invention and relates to several inventions or groups of inventions, namely:

1. claims: 1-4, 11, 12(completely); 15(partially)

    apparatuses (claims 1-4), methods (claims 11 and 12) and computer programs (claim 15 insofar as claim 15 relates to the methods of claims 11 and 12) wherein a preliminary annotation is transformed to an enhanced annotation, the enhanced annotation comprising annotations for pixels to belong to a transition between an object and background or to a transition between objects, and wherein a classifier is determined based on the enhanced annotation

    ---

2. claims: 5-10, 13, 14(completely); 15(partially)

    apparatuses (claims 5-10), methods (claims 13 and 14) and computer programs (claim 15 insofar as claim 15 relates to the methods of claims 13 and 14) wherein pixels belonging to an object are determined using both a probability map and a preliminary annotation, the probability map indicating a probability for pixels to belong to an object and the preliminary annotation comprising annotations for pixels to belong to an object or to background

    ---